# EUROPEAN PATENT APPLICATION

(11) **EP 4 534 949 A1**
(43) Date of publication of application: **09.04.2025**
(21) Application number: 24203333.0
(22) Date of filing: 27.09.2024
(51) Int. Cl.: G01B 5/008, G01B 21/04

(54) **COORDINATE MEASURING MACHINE WITH OPERATION STATE DISPLAY SYSTEM**

(30) Priority: 02.10.2023 IT 202300020241
(71) Applicant: Hexagon Technology Center GmbH, 9435 Heerbrugg (CH)
(72) Inventor: PERSICHILLI, Gabriele, 10153 TORINO (IT); PAUTASSO, Luciano, 10042 NICHELINO (TO) (IT)
(74) Representative: Studio Torta S.p.A.

(57) **Abstract**

A coordinate measuring machine comprising a movable unit (3) adapted to move a measuring head (15) in a measuring volume (V) and an operating state display system comprising first state light indicators (18) located in a top portion (12) of the machine (1) and visible from a distance at 360°, and a display (17) defining a graphical user interface (GUI) (20); the state light indicators (18) are configured to assume colours representative of different states of the machine (1), and the GUI (20) comprises at least one indicator (21) visible from a distance and representative of the state of the machine (1) and an information area (22) visible by an operator in close proximity to the machine (1) and containing operational details related to the state of the machine (1).

## Description

### CROSS-REFERENCE TO RELATED APPLICATIONS

This patent application claims priority from Italian patent application no. 102023000020241 filed on October 2, 2023, the entire disclosure of which is incorporated herein by reference.

### TECHNICAL FIELD

The invention relates to a coordinate measuring machine and, in particular, to a coordinate measuring machine provided with a system for displaying the operating state of the machine.

### STATE OF THE ART

Coordinate measuring machines provided with display systems are known. Such display systems, which can comprise - for example - one or more LED light indicators or a display, can provide a user with light signals or information reflecting the operating state of the machine. A machine provided with such a light indicator is disclosed in patent EP0694158B.

The information provided to an operator by known display systems generally is limited and does not allow the user to easily and quickly understand possible problems in progress. The limitations of known display systems are particularly evident in highly automated production contexts, in which the measuring machine is integrated in a production line and operates in an integrated manner with other machines that are part of the line. In such industrial contexts, the measuring machine is not normally assisted by a dedicated operator, but one single operator can manage several machines and, hence, be in a remote and adverse position with respect to them.

### SUMMARY

The object of the present invention is to provide a coordinate measuring machine provided with an improved display system, which is capable of solving the problems associated with known display systems of the type discussed above.

The aforesaid object is reached by a coordinate measuring machine comprising a movable unit adapted to move a measuring head in a measuring volume and an operating state display system comprising first state light indicators located in a top portion of the machine and visible from a distance at 360°, said state light indicators being adapted to assume colours representative of different states of the machine, and a display defining a graphical user interface (GUI), the GUI comprising at least one indicator visible from a distance and representative of the state of the machine and an information area visible by an operator in close proximity to the machine and containing operational details related to the state of the machine.

Advantageously, the machine can comprise a control system configured to acquire a current state of the machine and/or operational details related to the current state of the machine. Therefore, the control system can be configured to control the display and the first state light indicators so as to display the current state of the machine to an operator standing in any position close to and at a distance around the machine as well as so as to display operational details related to the current state of the machine to an operator standing close to the machine. Preferably, the current state of the machine is one of several states of the machine comprising or consisting of a finite number of different predefined states of the machine.

In this way, an operator can check the general operating state of the machine even from a remote location and have complete indications on said operating state once he/she reaches the vicinity of the machine.

Preferably, the movable unit comprises a first carriage movable along a first axis, a second carriage carried by the first carriage and movable with respect thereto along a second axis orthogonal to the first axis, and a spindle carried by the second carriage, movable with respect thereto along a third axis orthogonal to the first and second axes and adapted to support the measuring head.

According to a preferred embodiment of the invention, the machine further comprises at least a second light indicator located on the spindle or on the measuring head and capable of being activated in response to operational conditions of the measuring head. The measuring head can be configured to orient a measuring probe relative to the movable unit (in particular, relative to the spindle) according to at least one rotation axis to facilitate the measuring operations to be carried out to measure complex objects.

In this way, the operator can immediately understand if the machine has problems in relation to the measuring system and act accordingly.

Advantageously, the measuring head and/or the measuring probe are configured to be automatically or semi-automatically interchangeable from the machine so as to permit the use of various measuring heads and/or measuring probes deemed suitable for the measuring operation.

According to a preferred embodiment of the invention, the control system is configured to acquire the operational conditions of the measuring head and to control the display and the first state light indicators of the machine in such a way that the operational conditions of the measuring head can be displayed to an operator standing in any remote location around the machine. Advantageously, the second light indicator, when on, and the GUI indicator are the same colour as the first state light indicators.

Preferably, the first state light indicators, the second light indicator and the GUI indicator are adapted to take on at least a first colour corresponding to an alarm indication, for example red, a second colour corresponding to a warning indication, for example yellow, and a third colour corresponding to a normal operation indication (for example green and/or blue).

In this way, there is an immediate indication, according to a known "colour code", of the need for intervention and of any critical issues in place, regardless of the location and the relative distance of the operator relative to the machine.

Preferably, the first light indicators comprise front LEDs that gradually light up from the bottom to the top, indicating the percentage of speed at which the machine is working with respect to the maximum available speed.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
figure 1 is a perspective view of a coordinate measuring machine according to the invention;
figure 2 is a view, on a larger scale, of a detail of the machine of figure 1;
figures 3a, 3b, 3c, 3d, 4a, 4b, 4c, 4d, 5a, 5b, 5c, 5d show examples of configuration of a graphic user unit of the machine of the invention;
figures 6a, 6b are tables showing the configurations of a machine operating state display system; and
figure 7 is a block diagram of a control system of the machine of figure 1.

### DESCRIPTION OF EMBODIMENTS

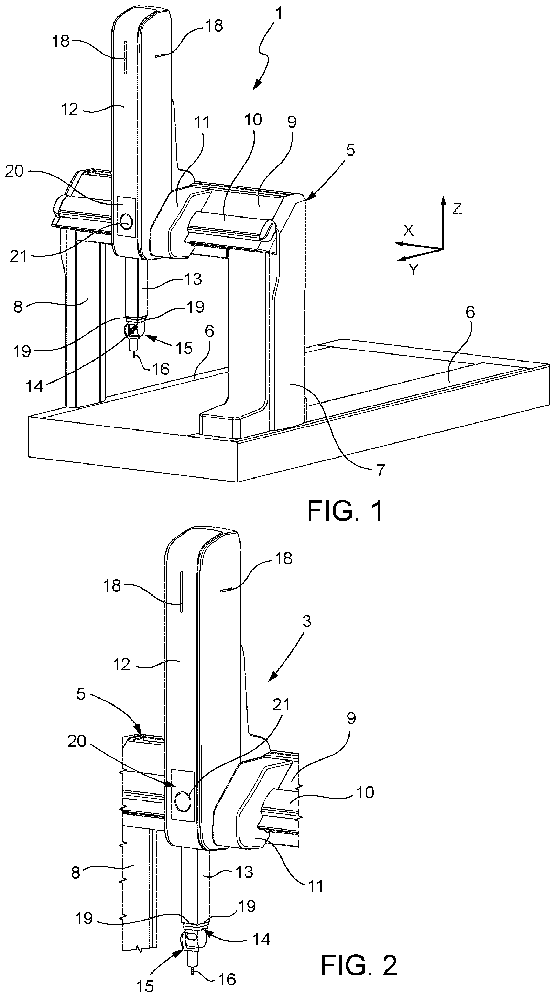

With reference to figures 1 and 2, number 1 indicates, as a whole, a coordinate measuring machine.

The measuring machine 1 comprises a bed 2 and a movable unit 3 adapted to move a measuring sensor 16 (figure 2) in a measuring volume V.

The bed 2 conveniently consists of a granite slab with a rectangular shape and delimits the measuring volume V at the bottom.

The movable unit 3 comprises a main bridge-like carriage 5 movable on the bed 2 along a pair of guides 6 parallel to a first horizontal axis Y parallel to the longer sides of the bed. The main carriage 5 is provided with a pair of uprights 7, 8 and a cross member 9 supported, at its ends, by the uprights 7,8 and provided with guides 10 parallel to a second horizontal axis X orthogonal to the axis Y.

The movable unit 3 further comprises a second carriage 11 carried by the cross member 9 and movable along the guides 10 in a direction parallel to the axis X. The second carriage 11 carries a tower 12, which vertically extends upwards, is internally hollow and supports, on the inside, a column 13 movable along a vertical axis Z. The column 13 defines, with a lower end of its projecting downwards from the tower 12, a spindle 14 for the connection of a measuring head 15 provided with a measuring probe, represented in figure 2 by the measuring sensor 16. The measuring head shown herein is configured to orient the measuring probe 16 relative to the spindle 14 according to two rotation axes, one perpendicular to the other. Advantageously, the measuring head and/or the measuring probe are configured to be interchangeably mounted on the machine so as to allow the machine to have a choice of different measuring heads and/or measuring probes in order to facilitate measuring operations, in particular when dealing with complex or delicate objects. The measuring probe can be of any type, with contact or contactless, for point-to-point measurements or for scans.

According to the invention, the machine 1 comprises a display 17 located in a front zone of the machine and, preferably, in a lower front zone of the tower 12, a plurality of state LEDs 18 located in a top region of the machine 1, for example an upper zone of the tower 12, and a plurality of spindle LEDs 19 located close to the spindle 14, as better described below.

According to the example shown herein, the state LEDs 18 are conveniently configured in four strips, located on the four sides of the tower 12 close to a top end thereof. For example, the front state LED strips 18 can be vertical and the side ones can be horizontal, but other configurations are obviously possible. The state LEDs 18 are conveniently visible from a distance, i.e. from a distance of at least 10 m, preferably at least 20 m, at 360°.

The state LEDs 18 can take on different colours and are adapted to provide a general indication of the operating state of the machine, so as to allow users to identify whether the operation is correct and/or whether the operator has to take some action. For example, the state LEDs 18 can take on a red colour in case of alarm, a yellow colour in case of warning and a green or blue colour in case of regular operation.

Preferably, the front state LEDs 18 gradually light up from the bottom to the top, for example on a scale from 1 to 10, indicating the percentage of speed at which the machine is working with respect to the maximum available speed. This is aimed at allowing a manager to verify that the machine is used as efficiently as possible and that unnecessary speed limitations are not maintained by mistake.

In the example shown herein, the spindle LEDs 19 are conveniently configured in four horizontal strips, located on the four sides of the column 13 close to the lower end 14 and are adapted to signal the state of the measuring head and of the measuring sensor. The spindle LEDs 19 can take on different colours depending on the operating state, as well. The LEDs 19 are conveniently visible from a medium distance, i.e. from a distance of at least 5 m, at 360°.

The state LEDs 18 and the spindle LEDs 19 can also assume a fixed configuration, an on/off configuration or a breathing configuration with variable intensity in a continuous manner.

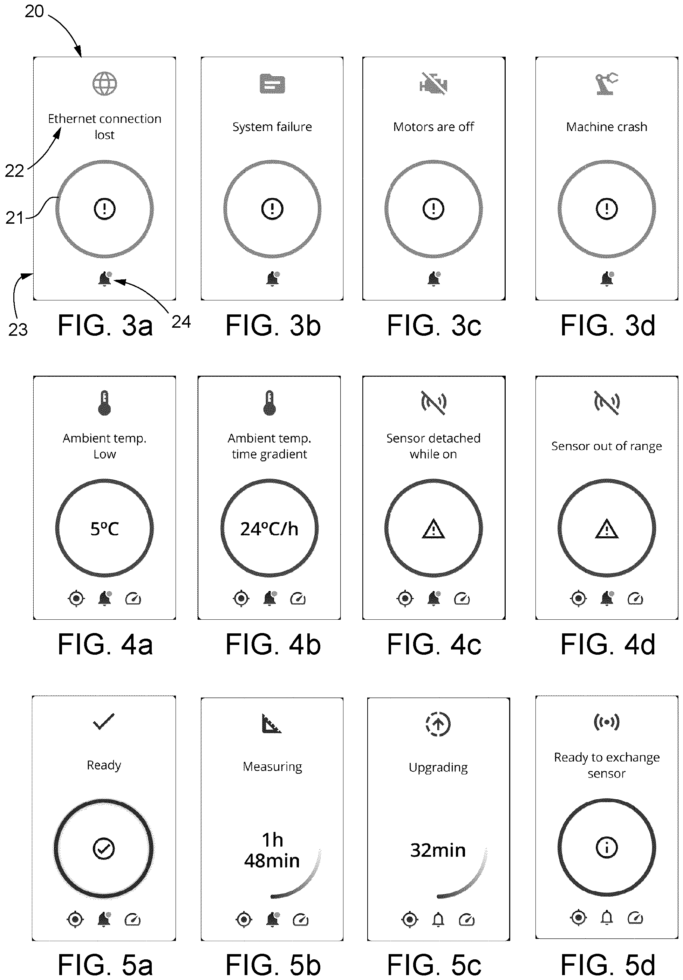

The display 17 is configured so as to define a graphical user interface (GUI) 20 (figures 3-6) adapted to provide a more detailed description of the state of the machine 1.

The GUI 20 (figure 3a) can comprise a state indicator 21, for example a circular one, adapted to assume a colour corresponding to the state LEDs 18, a notification panel 22 adapted to specifically describe the state of the machine 1 and an information panel 23 provided with a series of information pictograms 24, which can represent, for example, the presence or absence of software/firmware modules or notifications to be read. The size of the indicator 21 permits visibility to a remote operator, as opposed to the details represented by the notification panel 22, which are visible by an operator standing close to the machine, i.e. at a distance of less than 2 metres.

Examples of alarm configurations of the GUI 20, in which the state indicator 21 is red, are shown in figures 3a,3b,3c,3d. The alarm configurations indicate critical conditions that prevent the machine 1 from correctly operating and require immediate intervention by an operator to restore operation.

Examples of warning configurations of the GUI 20, in which the state indicator 21 is yellow, are shown in figures 4a,4b,4c,4d. The warning configurations indicate abnormal but non-critical situations that require operators' attention.

Examples of information configurations of the GUI 20, in which the state indicator 21 is green and indicates normal operational conditions of the machine, are shown in figures 5a,5b,5c,5d.

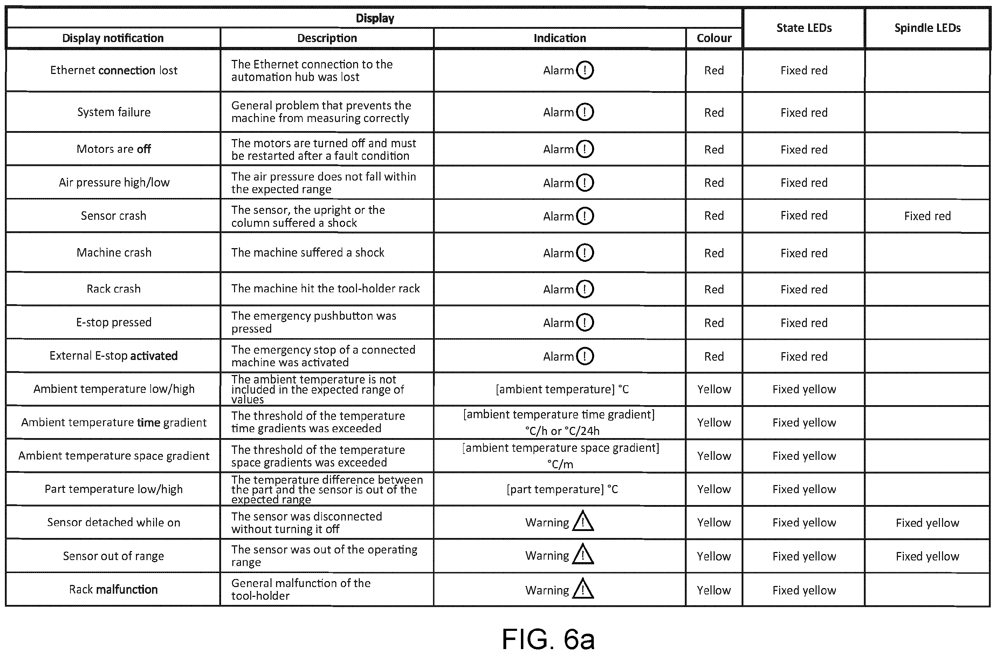

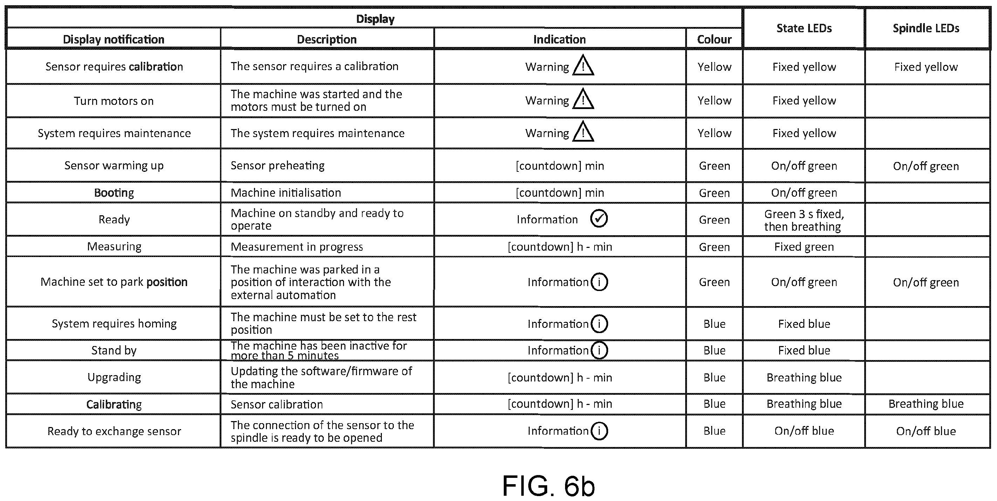

The possible configurations of the GUI 20 of the display 17 and the corresponding configurations of the state LEDs 18 and of the spindle LEDs 19 are shown in the table divided between figures 6a and 6b.

In particular, in a series of alarm configurations, the state indicator 21 of the GUI 20, the state LEDs 18 and, if turned on, the spindle LEDs 19 are red.

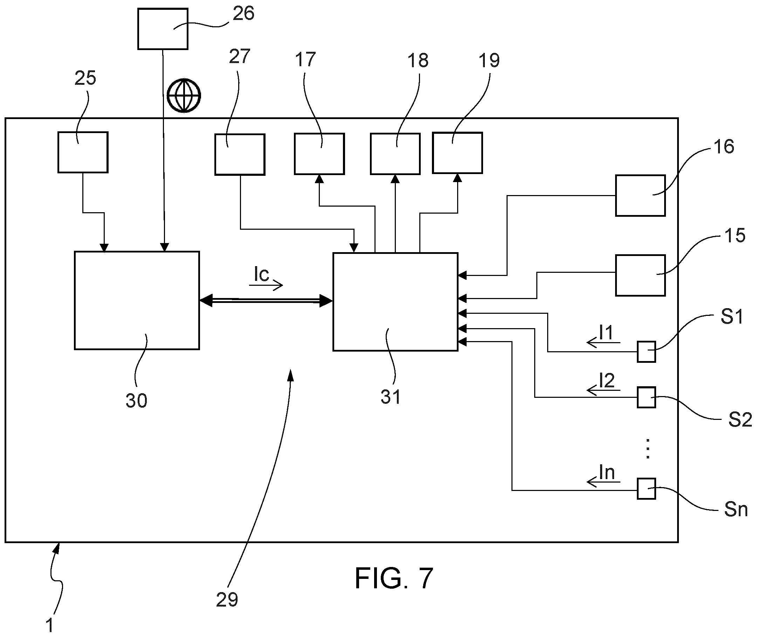

In each one of the aforesaid configurations, the notification panel 22 provides an indication of the state of the machine, such as for example:
- Ethernet connection lost;
- System failure;
- Motors are off;
- Air pressure high/low;
- Sensor crash;
- Machine crash;
- Rack crash (crash against the tool-holder rack);
- E-stop pressed (emergency pushbutton 25 pressed, see figure 7);
- External E-stop activated (external emergency stop activated), in case the machine 1 is part of an automatic line whose units are connected to one another through an automation hub 26 (figure 7), for example via Ethernet, and the emergency stop is caused by the stop of another unit of the line.

In a series of warning configurations, the state indicator 21 of the GUI 20, the state LEDs 18 and, if turned on, the spindle LEDs 19 are yellow; examples of the warning configurations are:
- Ambient temperature low/high;
- Ambient temperature time gradient;
- Ambient temperature space gradient;
- Ambient temperature low/high;
- Sensor detached while on;
- Sensor out of range;
- Rack malfunction (malfunction of the tool holder);
- Sensor requires calibration;
- Please, turn motors on;
- System requires maintenance.

In a series of configurations representative of a normal operation of the machine 1, the state indicator 21 of the GUI 20, the state LEDs 18 and, if turned on, the spindle LEDs 19 are green; examples of these configurations are the following ones:
- Sensor warming up;
- Booting (initializing the machine);
- Ready;
- Measuring (measurement in progress);
- Machine set to park position (machine parked in a position of interaction with the external automation).

In a series of waiting configurations, the state indicator 21 of the GUI 20, the state LEDs 18 and, if turned on, the spindle LEDs 19 are blue; examples of the waiting configurations are:
- System requires homing (the machine must be set to a predetermined rest position);
- Standby (the machine has been inactive for more than 5 minutes);
- Upgrading (software/firmware update);
- Calibrating (sensor calibration);
- Ready to exchange sensor.

Obviously, this is an exemplary list of configurations, which could be modified, integrated or reduced depending on the needs.

Furthermore, the disclosed configurations are not to be considered, as a whole, as a predetermined combination of features, but rather as a list of stand-alone features, which can be used singularly or in combination with one another.

Figure 7 shows a block diagram of a control system 29 of the machine 1, consisting of a central control unit 30, conveniently integrated with in the bed 2, and of a peripheral control unit 31 carried by the tower 12.

The central control unit 30 is responsible for the general control of the machine 1 and constitutes the interface of the machine 1 to the outside and, in particular, to an automation hub 26 of the line; the peripheral control unit 31 is connected to the central control unit 30 and is configured to act as an interface between the latter and the devices/sensors carried by the carriage 11, so as to rationalise and minimise the electrical wiring of the machine 1.

In particular, the peripheral control unit 31 is connected to the measuring head 15, to the measuring sensor 16 and to a plurality of sensors S1, S2, ..., Sn carried by the carriage 11 or by the column 12 including, for example, temperature probes. The peripheral control unit 31 controls the display 17, the state LEDs 18 and the spindle LEDs 19 in response to input signals I1, 12, ..., In received from the sensors S1, S2, ..., Sn and to input signals Ic received from the central control unit 30. A camera 27 is also connected to the peripheral control unit 31, conveniently fixed to a rear face of the cross member 9 and having the purpose of monitoring the measuring volume V.

In particular, the control system 29, possibly by means of the peripheral control unit 31, is connected to a controller of the measuring head 15 and/or of the measuring probe 16 (not shown) so as to be able to acquire the operational conditions of the measuring head and/or of the measuring probe. The control system 29 can be configured to control the display 17 and the first state light indicators 18 of the machine so as to allow said operational conditions to be displayed to an operator located in an adverse position, i.e. at a distance and/or behind the machine.

## Claims

1. A coordinate measuring machine comprising a movable unit (3) adapted to move a measuring head (15) in a measuring volume (V), **characterized by** comprising an operating state display system comprising first state light indicators (18) arranged in a top portion (12) of the machine (1) and visible remotely from 360°, said first state light indicators (18) being configured to assume colours representative of different states of the machine (1), and a display (17) defining a graphical user interface (GUI) (20), the GUI (20) comprising at least one indicator (21) remotely visible and representative of the state of the machine (1) and an information area (22) visible by an operator in close proximity to the machine (1) and containing operational details related to the state of the machine (1).

2. A machine as claimed in claim 1, comprising a control system (29) configured to acquire a current state of the machine and/or operational details related to a current state of the machine;
the control system being configured to control the display (17) and the first state light indicators (18) in such a manner as to display: the current state of the machine to an operator located at any position in proximity and at a distance around the machine, and operational details related to the current state of the machine to an operator located in proximity to the machine.

3. A machine as claimed in claim 1 or 2, wherein the movable unit (3) comprises a first carriage (5) movable along a first axis (Y), a second carriage (11) carried by the first carriage (5) and movable with respect thereto along a second axis (X) orthogonal to the first axis (Y), and a spindle (14) carried by the second carriage (11), movable with respect thereto along a third axis (Z) orthogonal to the first and second axes (Y, X) and adapted to support the measuring head (15).

4. A machine as claimed in claim 3, further comprising at least a second indicator light (19) located on the spindle (14) or on the measuring head (15) and operable in response to operating conditions of the measuring head (15).

5. A machine as claimed in claim 4, wherein the control system (29) is configured to acquire the operating conditions of the measuring head and to control the display (17) and the first state light indicators (18) in such a way that said operating conditions of the measuring head can be displayed to an operator located at any remote location around the machine; preferably the measuring head is configured to orient a measuring probe relative to the moving unit according to at least one axis of rotation; preferably the measuring head and/or the measuring probe are configured to be automatically or semi-automatically interchangeable from the machine.

6. Machine as claimed in claim 5, wherein the second light indicator (19), when on, and the GUI indicator (21) are the same colour as the first state light indicators (18) .

7. Machine as claimed in claim 6, wherein the first state light indicators (18), the second light indicator (19), and the GUI indicator (21) (20) are configured to take on at least a first colour corresponding to an alarm indication, a second colour corresponding to a warning indication, and a third colour corresponding to a normal operation indication.

8. A machine as claimed in claim 7, wherein the alarm indication is generated in response to the detection of one or more conditions selected from the group comprising: loss of the Ethernet connection, system failure, motors off, air pressure not within a predetermined range, impact of the machine, measuring head or spindle, impact against the tool rack, emergency stop by pushbutton or by external signal from a connected machine.

9. Machine as claimed in claim 7 or 8, wherein the warning indication is generated in response to the detection of one or more conditions selected from the group comprising: ambient temperature not within a predetermined range of values, spatial gradient of ambient temperature not within a predetermined range of values, temporal gradient of ambient temperature not within a predetermined range of values, workpiece temperature not within a predetermined range of values, measuring sensor disconnected without turning it off, measuring sensor outside a predetermined range of operation, malfunction of the tool magazine, need for machine calibration, need to turn on motors, need for maintenance.

10. A machine as claimed in any of claims 7 to 9, wherein the indication of normal operation is generated in response to the detection of one or more conditions selected from the group comprising: sensor warm-up, machine initialization, machine ready, measurement in progress, machine arranged in parking position.

11. A machine as claimed in any one of claims 7 to 10, wherein the first light indicators (18), the second light indicator (19), and the GUI indicator (21) are configured to assume a corresponding fourth colour in response to the detection of one or more conditions selected from the group comprising: need to arrange the machine in a rest position, idle machine, software/firmware update, sensor calibration, machine ready for sensor change.

12. Machine as claimed in any of claims 4 to 11 when dependent on claims 2 and 3 , wherein the control system (29) comprises a central control unit (30) stationary with respect to the measurement volume (V) and a peripheral control unit (31) carried by the second carriage (11) and connected to the central control unit (30), the peripheral control unit (31) being connected to the display (17), the first state light indicators (18) and the second light indicator (19) to control them in response to signals (I1, I2, ... , In) received from respective sensors carried by the carriage (11) and to signals (Ic) received from the central control unit (30).

13. Machine as claimed in claim 12, wherein the central control unit (30) is configured to be connected with an automation hub (26) of an automated line of which the machine is a part.

14. A machine as claimed in any of claims 3 to 13 when dependent on claim 2, **characterized by** being a bridge-type machine, and that the top portion of the machine (1) is a tower (12) carried by the second carriage (11) and housing a column (13) vertically movable and defining said spindle (14) .
